(19) Europäisches Patentamt
European Patent Office
Office européen des brevets

(11) **EP 3 960 332 A1**

(12) **EUROPEAN PATENT APPLICATION**
published in accordance with Art. 153(4) EPC

(43) Date of publication:
**02.03.2022 Bulletin 2022/09**

(21) Application number: **20794400.0**

(22) Date of filing: **26.02.2020**

(51) International Patent Classification (IPC):
**B22F 3/105** (2006.01)        **B22F 3/16** (2006.01)

(52) Cooperative Patent Classification (CPC):
**B22F 3/105; B22F 3/16; B33Y 30/00; B33Y 50/00**

(86) International application number:
**PCT/JP2020/007793**

(87) International publication number:
**WO 2020/217696 (29.10.2020 Gazette 2020/44)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **26.04.2019 JP 2019086508**

(71) Applicant: **Hitachi, Ltd.**
**Tokyo 100-8280 (JP)**

(72) Inventors:
• **YANG Yingjuan**
**Tokyo 100-8280 (JP)**

• **HAMAGUCHI Takashi**
**Tokyo 100-8280 (JP)**
• **PARK Minseok**
**Tokyo 100-8280 (JP)**
• **MATSUSHITA Shinji**
**Tokyo 100-8280 (JP)**
• **OONUMA Atsuhiko**
**Tokyo 100-8280 (JP)**

(74) Representative: **MERH-IP Matias Erny Reichl Hoffmann**
**Patentanwälte PartG mbB**
**Paul-Heyse-Strasse 29**
**80336 München (DE)**

(54) **LAMINATION MOLDING CONDITION GENERATING METHOD, LAMINATION MOLDING ASSISTANCE SOFTWARE, AND LAMINATION MOLDING ASSISTANCE SYSTEM**

(57)    An additive manufacturing condition generating method is an additive manufacturing condition generating method that supports a manufacturing condition for additive manufacturing of a metallic structure. The method includes: the target temperature index calculating step to calculate a target temperature index from the target characteristic in each region of the structure; the predicted temperature index calculating step to calculate a predicted temperature index for each region from the shape, material and manufacturing condition of the structure; the evaluation step to evaluate whether the difference between the target temperature index and the predicted temperature index is within an allowable range or not; and the manufacturing condition modification step to modify the manufacturing condition if the difference is out of the allowable range at the evaluation step. The manufacturing condition modification step and the predicted temperature index calculating step are repeated until the difference falls within the allowable range at the evaluation step.

FIG.2

START

S1 — CALCULATE TARGET TEMPERATURE INDEX ($I_{target}$) FROM TARGET CHARACTERISTIC

S2 — CALCULATE PREDICTED TEMPERATURE INDEX ($I_{prediction}$) FROM SHAPE, MATERIAL, AND MANUFACTURING CONDITION

S3 — $\Delta I = |I_{target} - I_{prediction}| \leq \delta$ ?

NO → S4 — MODIFY MANUFACTURING CONDITION FOR REGION OUT OF ALLOWABLE RANGE

YES

S5 — OUTPUT MANUFACTURING CONDITION

END

**Description**

Technical Field

The present invention relates to an additive manufacturing condition generating method that generates an additive manufacturing condition from the target characteristic of a structure, additive manufacturing support software, and an additive manufacturing support system.

Background Art

For additive manufacturing that uses a metallic material, various methods including the powder bed fusion method and directed energy deposition method are adopted and a method that performs manufacturing by fusing the material by heat is generally used. This additive manufacturing is a technique that manufactures a shape by laminating layers with tens to hundreds of micrometers or so in thickness. Here, in the powder bed fusion method, a powder layer is spread all over each layer of a region including a cross section of the shape to be manufactured and a spot including the shape to be manufactured is fused using a laser or the like. In the directed energy deposition method, powder is supplied to a spot including the shape to be manufactured and fusion is made using a laser or the like.

However, in any method, while the material is molten and solidified to laminate a shape, the repeated thermal influence of melting/solidification and lamination changes depending on the manufacturing condition and the structure shape, which affects the material characteristics. Therefore, in order to satisfy the material physical property required of a complicated structure, it is important to predict the material characteristics of the structure as an investigation before manufacture and design the manufacturing condition and the shape to be manufactured so as to satisfy the required characteristics.

As a method for predicting the material characteristics of the structure manufactured by additive manufacturing, Patent Literature 1 describes a method that estimates the material physical properties, such as density, Young's modulus, and Poisson ratio, according to a lamination method and predicts the strength of the structure. Patent Literature 2 also describes a technique that generates control data to fabricate a structure, from the material characteristics of a construction material.

On the other hand, for a specified material, due to the required characteristics, a fixed manufacturing condition is used for regions other than the support and the surface, so in a specific region, the temperature history may change due to the local shape, resulting in a failure to satisfy the required characteristics. In addition, no consideration is given to the possibility that if the manufacturing condition is locally changed, the thermal influence on the surroundings may change and affect the material characteristics in the surrounding regions.

Citation List

Patent Literature

Patent Literature 1: Japanese Patent Application Laid-Open No. 2017-177462
Patent Literature 2: Japanese Patent Application Laid-Open No. 2018-134866

Summary of Invention

Technical Problem

As mentioned above, in order to achieve the required characteristics of a structure, it is necessary to control the additive manufacturing method (scanning direction, scanning pitch, lamination pitch, etc.). On the other hand, the material characteristics of the structure depend on temperature and the temperature history of the structure varies with local shapes. If the additive manufacturing condition is changed for a local region of the structure, due to the thermal influence, the temperature history may also be different in the surroundings of the changed region and it might be impossible to obtain the required characteristics as predicted.

In addition, if the optimum manufacturing condition is calculated by repeating heat-transfer analysis on a micromesh and computing-time basis so as to reproduce the difference of material characteristics of the entire object to be manufactured, there is a problem that the number of steps tends to be very large, resulting in a long computing time.

Therefore, the object of the present invention is to provide, in view of the above existing problem, and in consideration of the thermal influence on surrounding regions of a change in the manufacturing condition in a local region, an additive manufacturing condition generating method that generates an additive manufacturing condition to enable the required characteristics to be achieved in a plurality of regions of a structure, additive manufacturing support software, and an additive manufacturing support system.

Solution to Problem

In order to achieve the above object, an additive manufacturing condition generating method according to the present invention is an additive manufacturing condition generating method that generates a manufacturing condition for additive manufacturing of a metallic structure. The method is characterized by comprising: the target temperature index calculating step to calculate a target temperature index from a target characteristic in each region of the structure; the predicted temperature index calculating step to calculate a predicted temperature index for each region from a shape, material and manufacturing condition of the structure; the evaluation step to evaluate whether difference between the target temperature index and the predicted temperature index is within an allowable range or not; and the manufacturing condition modification step to modify the manufacturing condition if the difference is out of the allowable range at the evaluation step. The manufacturing condition modification step and the predicted temperature index calculating step are repeated until the difference falls within the allowable range at the evaluation step. Other forms of the present invention will be described in an embodiment which will be described later.

Advantageous Effects of Invention

According to the present invention, it is possible to provide an additive manufacturing condition that can achieve required characteristics in a plurality of regions of a structure in consideration of the thermal influence on surrounding regions of a change in the manufacturing condition for a local region.

Brief Description of Drawings

Fig. 1 is a view that shows an example of setting of target characteristics in the additive manufacturing condition generating method according to this embodiment.
Fig. 2 is a flowchart that shows the process of the additive manufacturing condition generating method according to this embodiment.
Fig. 3 is a flowchart that shows the process of the method for modifying the manufacturing condition according to this embodiment.
Fig. 4 is a flowchart that shows the process of modifying the manufacturing condition for a modification zone according to this embodiment.
Fig. 5A is a view that shows the upper surface of a structure.
Fig. 5B is a view that shows confirmed zones and modification zones in modification of the manufacturing condition.
Fig. 5C is a view that shows buffer zones in modification of the manufacturing condition.
Fig. 6 is a structure diagram of an additive manufacturing support system according to this embodiment.
Fig. 7 is a view that shows an input screen of the additive manufacturing support system according to this embodiment.
Fig. 8 is a view that shows an input screen for the target characteristic setting function according to this embodiment.
Fig. 9 is a view that shows a sub-region setting screen according to this embodiment.
Fig. 10 is a view that shows an example of the output form of target temperature index range according to this embodiment.

Description of Embodiments

Hereinafter, an additive manufacturing condition generating method according to the present invention will be described in detail, referring to drawings.

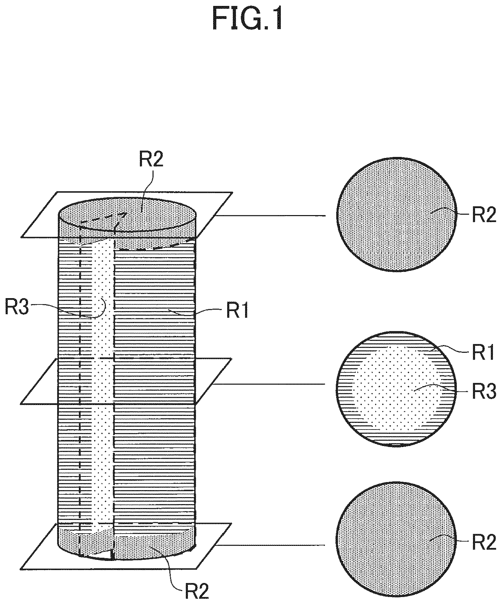

Fig. 1 is a view that shows an example of setting of target characteristics in the additive manufacturing generating method according to this embodiment. Fig. 1 illustrates a simplified rod-like structure (for example, a control rod). In order to facilitate explanation of the inner regions, the figure shows a portion taken like cutting a cake. In additive manufacturing, the manufacturing device irradiates a powder material as deposition of layers each having a thickness of 0.02 to 0.04 mm, with a laser and forms it into a solid object by melting and solidification. Here, the cross sections of the bottom surface, center surface and upper surface are shown on the right. Here, a portion that has the same target characteristic is defined as one "region".
If one of plant components is manufactured by additive manufacturing using dispersion-strengthened austenitic steel as a construction material, surface region R1 requires corrosion resistance and in order to prevent embrittlement due to ferrite phase, the ferrite phase ratio must be reduced. On the other hand, if partial manufacturing is made with 3D manufacturing (three-dimensional manufacturing) area limitation, in order to meet the weldability of joint region R2, several percent of ferrite phase is required.

In addition, for other region R3, mechanical strength is required, so a low defect rate, fine and equiaxed crystal grains and uniformly dispersed precipitates are desired.

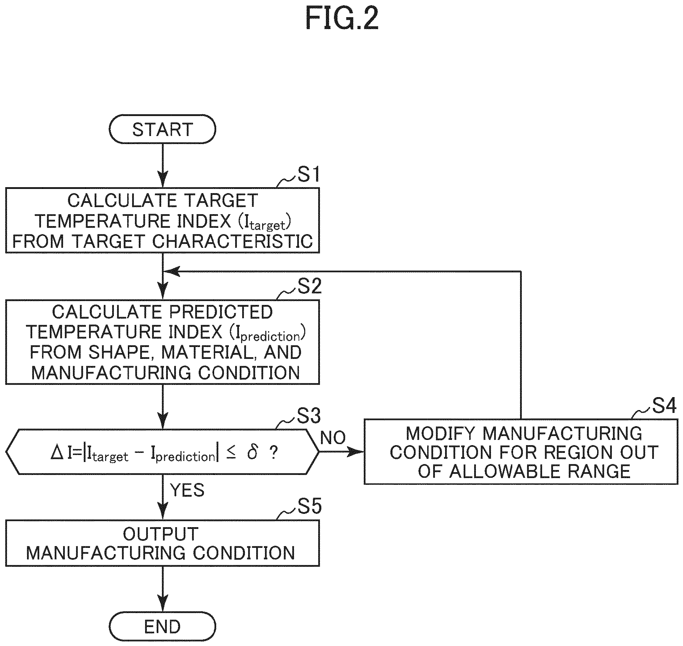

Fig. 2 is a flowchart that shows the process of generating an additive manufacturing condition according to this embodiment.

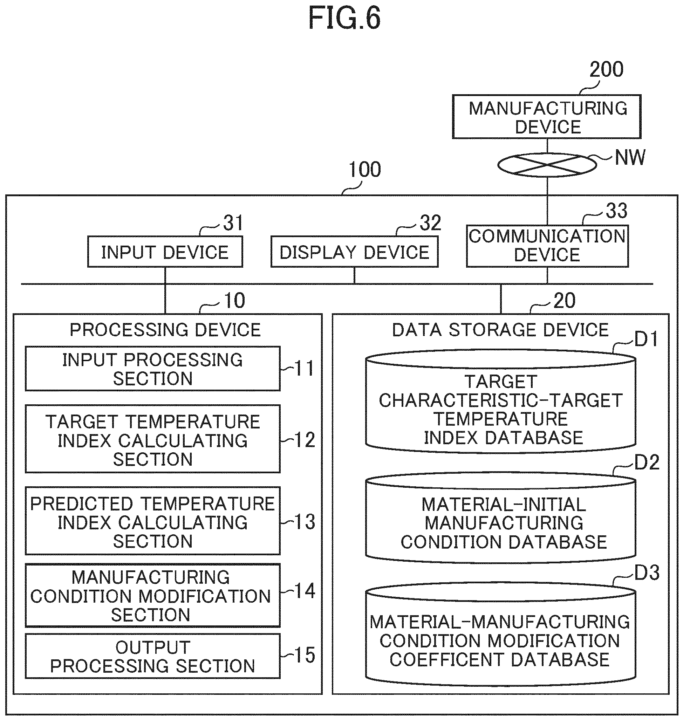

Step S1: The processing device calculates target temperature index $I_{target}$ from the set target characteristic. The temperature index includes at least one of maximum achieved temperature, temperature gradient, cooling speed, solidification speed, and stay time in the phase transformation temperature range. In calculation of target temperature index $I_{target}$, reference is made to database D1 of target characteristics and target temperature indices (see Fig. 6) that represents the relation between the characteristic of an additively manufactured structure and the temperature index obtained in manufacturing.

Step S2: The processing device calculates predicted temperature index $I_{prediction}$ from the structure shape, material, and initial manufacturing condition. The initial manufacturing condition is a manufacturing condition entered by the user or a manufacturing condition extracted from the material in use according to database D2 of materials and initial manufacturing conditions (see Fig. 6). The manufacturing condition includes output power of heat source, scan speed, and material preheating temperature. As the method for calculating predicted temperature index $I_{prediction}$, the processing device, makes a mesh for the shape of the structure and calculates predicted temperature index $I_{prediction}$ of each mesh element from the structure shape, material and manufacturing condition by heat-transfer analysis.

Step S3: The processing device calculates difference $\Delta I$ between target temperature index $I_{target}$ and predicted temperature index $I_{prediction}$ for each element of the structure in accordance with Equation (1):

$$\Delta I = \left| I_{target} - I_{prediction} \right| \qquad (1)$$

If $\Delta I$ is within allowable range $\delta$, the processing device goes to Step S5 and outputs the generated optimum additive manufacturing condition. If the difference is out of the allowable range $\delta$, the processing device goes to Step S4.

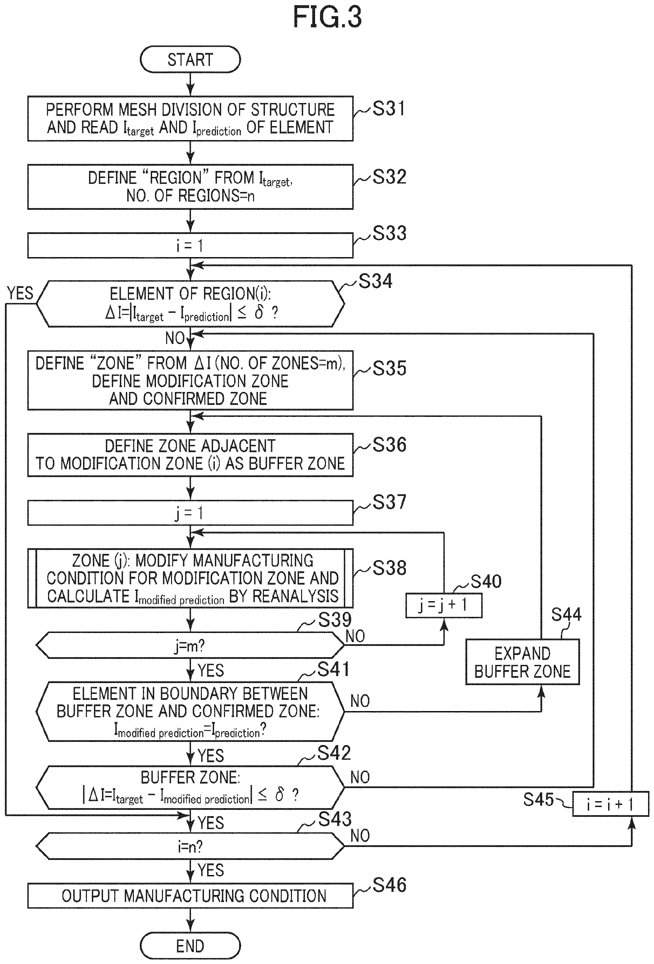

Step S4: The processing device modifies the manufacturing condition for an element out of the allowable range. The processing device again calculates predicted temperature index $I_{prediction}$ locally for the modified element and elements adjacent to it and goes back to Step S2. The processing device repeats the above steps until the predicted temperature index $I_{prediction}$ falls within the allowable range of target temperature index $I_{target}$ in all the regions and generates an additive manufacturing condition. The flow of the method for modifying the manufacturing condition is explained in detail referring to Fig. 3.

Fig. 3 is a flowchart that shows the process of the method for modifying the manufacturing condition according to this embodiment.

Step S31: The processing device performs mesh division of the structure and acquires (reads) the target temperature index $I_{target}$ and predicted temperature index $I_{prediction}$ of an element.

Step S32: Elements whose $I_{target}$ is the same are defined as one region and the number of regions is taken as n.

Step S33: The processing device sets i to 1.

Step S34: The processing device judges whether the difference $\Delta I$ between target temperature index $I_{target}$ and predicted temperature index $I_{prediction}$ (see Equation (1) above) is within the allowable range $\delta$ or not for the element of region (i) . If it is within the allowable range $\delta$ (Step S34, Yes), the processing device goes to Step S43. If it is out of the allowable range $\delta$ (Step S34, No), the processing device goes to Step S35.

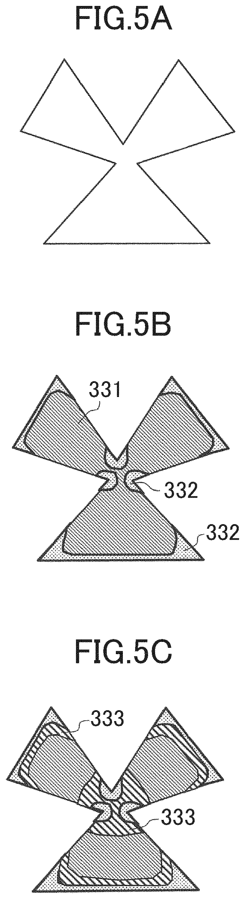

Step S35: The processing device divides the difference $\Delta I$ between target temperature index $I_{target}$ and predicted temperature index $I_{prediction}$ into several stages and defines elements which have $\Delta I$ of the same stage and are adjacent to each other, as a "zone". The processing device takes the total number of zones, j (number of zones) as m. It defines the elements whose difference $\Delta I$ is within the allowable range $\delta$, as confirmed zone 331 (see Fig. 5B, Confirmed zone) and regions out of the allowable range $\delta$ as modification zone 332 (see Fig. 5B, Modification zone).

Step S36: The processing device defines a buffer zone 333 from a confirmed zone 331 adjacent to zone (j), a modification zone (see Fig. 5C, Buffer zone) and takes it as belonging to the same zone (j). The method for defining zones will be explained later referring to Fig. 5.

Step S37: The processing device sets j to 1.

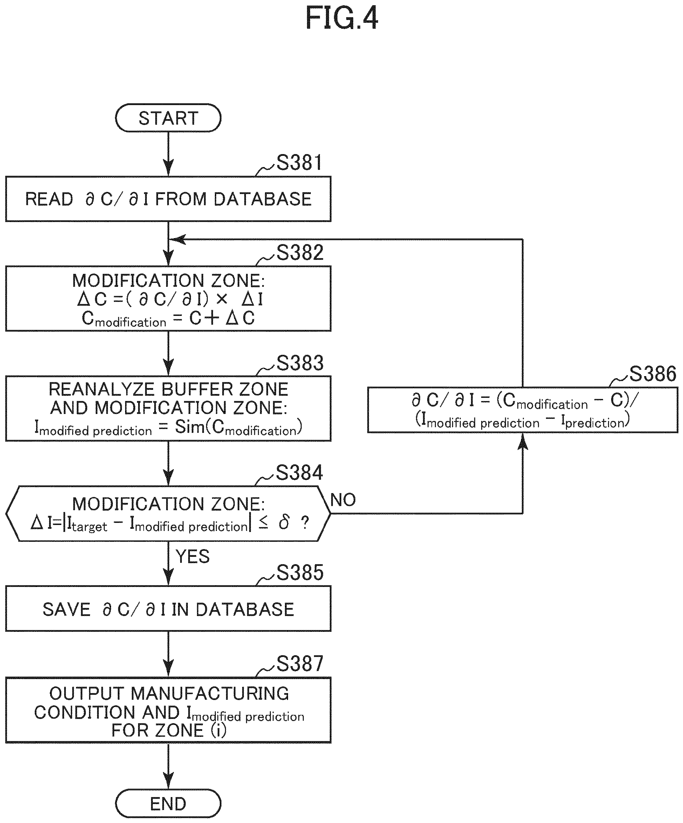

Step S38: The processing device modifies the manufacturing condition until the difference $\Delta I$ between target temperature index $I_{target}$ and predicted temperature index $I_{prediction}$ falls within the allowable range $\delta$, in modification zone 332 (Modification zone) of zone (j). The processing device calculates predicted temperature index $I_{modified}$ prediction again for modification zone 332 as modified zone (j) and buffer zone 333. The method for calculating a modified value for the manufacturing condition will be explained later referring to Fig. 4.

Step 39: The processing device checks whether a judgement has been made for all modification zones 332, namely if j=m (Step S39, Yes), it goes to Step S41, If j<m (Step S39, No), the processing device adds 1 to j (Step S40) and goes back to Step S38.

Step S41: The processing device checks whether, for the elements in the boundary between a buffer zone and a confirmed zone, the predicted temperature index has changed or not after modification of the manufacturing condition. If $I_{modified}$ prediction and $I_{prediction}$ agree (within a specified value range) (Step S41, Yes), the processing device goes to Step 42. If $I_{modified}$ prediction and $I_{prediction}$ do not agree (Step S41, No), it expands the buffer zone 333 range (Step S44) and goes back to Step S36.

Step S42: The processing device judges whether the difference $\Delta I$ between target temperature index $I_{target}$ and predicted temperature index $I_{prediction}$ is within the allowable range $\delta$ or not for the buffer zone 333. If it is within the allowable range $\delta$ (Step S42, Yes), the processing device goes to Step S43. If it is out of the allowable range $\delta$ (Step S42, No), the processing device goes back to Step S35 and redefines the region.

Step S43: The processing device checks whether a judgment has been made for all the regions, namely if i=n (Step S43, Yes), it outputs a manufacturing condition (Step S46) and ends a series of processing steps. If i<n (Step S43, No), the processing device adds 1 to i (Step S45) and goes back to Step S34.

In the above manufacturing condition modifying steps S35 to S41 and S44, when modifying the manufacturing condition, the processing device performs reanalysis of the region for which the manufacturing condition has been modified, and regions adjacent to it (Step S38) and judges whether the predicted temperature index in the boundaries of these regions agrees with the predicted temperature index before modification of the manufacturing condition (Step S41) and if they do not agree (Step S41, No), the processing device expands the region for local reanalysis (Step S44) .

Fig. 4 is a flowchart that shows the process of modifying the manufacturing condition for a modification zone in zone (j) according to this embodiment. Step S381: Taking the manufacturing condition as C, the processing device reads the initial value of manufacturing condition modification coefficient $\partial C/\partial I$ from database D3 of materials and manufacturing condition modification coefficients (see Fig. 6). $\partial C/\partial I$ is stored for each material.

Step S382: For modification zone 332, the manufacturing condition after modification, $C_{modification}$, is calculated in accordance with Equation (2) and Equation (3).

$$\Delta C = (\partial C/\partial I) \times \Delta I \qquad (2)$$

$$C_{modification} = C + \Delta C \qquad (3)$$

For example, if the maximum achieved temperature (T) is a temperature index, the processing device modifies laser output power P of the manufacturing condition. If the target maximum achieved temperature is lower than the predicted maximum achieved temperature by 500°C and $\Delta T=-500$, the processing device reads 10 as $\delta T/\delta P$ from the database D3 of materials and manufacturing condition modification coefficients and calculates output power modification value $\Delta P$ in accordance with Equation (4).

$$\Delta P = (\delta P/\delta T) \times \Delta T \qquad (4)$$

Since the output power modification value $\Delta P$ is -50, the processing device makes correction by making the laser output power lower than the existing condition by 50 W for the modification zone.

Step S383: The processing device reanalyzes the modification zone and buffer zone using the modified manufacturing condition $C_{modification}$. For the boundary between the confirmed zone 331 and buffer zone 333, it again calculates predicted temperature index $I_{modified}$ prediction with an initial predicted temperature history as a boundary condition.

Step S384: The processing device judges whether for the modification zone 332, $\Delta I= |I_{target} - I_{modified\ prediction}|$ is within the allowable range $\delta$ or not. If it is within the allowable range $\delta$ (Step S384, Yes), the processing device goes to the next step S385. If it is out of the allowable range $\delta$ (Step S384, No), the processing device goes to Step S386.

Step S385: The processing device updates and saves $\partial C/\partial I$ in database D3 of materials and manufacturing condition modification coefficients.

Step S386: The processing device calculates $\partial I/\partial C$ in accordance with Equation (5).

$$\partial C / \partial I = (C_{modification} - C) / (I_{modified\ prediction} - I_{prediction})\ (5)$$

Then, the processing device goes back to Step S382.

Step S387: The processing device outputs a manufacturing condition and $I_{modified}$ prediction for zone (j).

An example of definition of zones in modification of the manufacturing condition will be explained referring to Fig. 5A to 5C.

Fig. 5A is a view that shows the upper surface of a structure, Fig. 5B is a view that shows confirmed zones and modification zones in modification of the manufacturing condition, and Fig. 5C is a view that shows buffer zones in modification of the manufacturing condition. Let's assume that the same target characteristic is requested for all portions of the structure shape. Since the outer frame of the structure has a large area in contact with surrounding powder and the powder is low in thermal conduction, heat accumulation would occur, causing a failure to achieve the target temperature index.

Therefore, a region (outer frame) in which the difference between the initial predicted temperature index and the target temperature index is out of the allowable range δ is defined as modification zone 332 (Modification zone) and a portion in which it is within the allowable range δ is defined as confirmed zone 331 (Confirmed zone). The processing device defines a region adjacent to the modification zone 332 from the confirmed zone 331 as buffer zone 333. For example, the processing device takes an adjacent region having a volume of 0.2 to 1.0 time the volume of the modification zone 332, as buffer zone 333.

Fig. 6 is a structure diagram of an additive manufacturing support system 100 according to this embodiment. The additive manufacturing support system 100 includes a processing device 10, a data storage device 20, an input device 31, a display device 32, a communication device 33 and the like. In addition, the additive manufacturing support system 100 is communicably connected with a manufacturing device 200 through a network NW.

The processing device 10 is a device that outputs a modified manufacturing condition using information from the input device 31 and data storage device 20, and outputs it to the manufacturing device 200 through the display device 32 or communication device 33. The data storage device 20 is a device that stores databases. It contains database D1 of target characteristics and target temperature indices that represents the relation between target characteristic and target temperature index (target characteristic-target temperature index DB, a first database), database D2 of materials and initial manufacturing conditions that represents the relation between material and initial manufacturing condition (material-initial manufacturing condition DB), database D3 of materials and manufacturing condition modification-coefficients that represents the relation between material and manufacturing condition modification coefficient (material-manufacturing condition modification coefficient DB), a database that represents the relation between the shape, material and manufacturing condition of a structure and predicted temperature index (not shown, a second database) and the like.

Particularly the second database includes data that represents the relation between material and initial manufacturing condition. The initial manufacturing condition is, for example, 1) condition recommended by the device maker, 2) a manufacturing condition under which manufacturability is demonstrated by prior experimentation and investigation and the defect ratio of a manufacturing material is within a practically applicable range, or 3) a manufacturing condition that has been stored in the data storage device during use by the user in the past, or the like.

The database D1 of target characteristics and target temperature indices can be obtained from the measurement result of a structure additively manufactured under at least one manufacturing condition or obtained by analysis through simulation of manufacturing circumstances.

The input device 31 is a device that enters data. The display device 32 is a device that displays information received from an input processing section 11 or output processing section 15 of the processing device 10. The communication device 33 sends the information received from the output processing section 15 of the processing device 10 to the manufacturing device 200 and receives a request command from the manufacturing device 200.

The manufacturing device 200 performs additive manufacturing according to the shape and manufacturing condition received from the additive manufacturing support system 100. The device uses a laser or electron beam as a heat source and operates one or more heat sources at a time for manufacturing. The manufacturing condition includes the type of one or more heat sources, heat source output power, scan speed, and material preheating temperature. Preheating is performed using a means to heat the base plate of the manufacturing device 200 to heat powder and the entire manufactured portion. Alternatively, preheating may use a means to preheat the powder on the uppermost surface by lighting of the lamp from above.

Various sections of the processing device 10 are explained below.

The input processing section 11 is a section that receives and processes the information required to generate an additive manufacturing condition. The required condition includes structure shape (including posture and support), material, and structure target characteristics.

The target temperature index calculating section 12 is a section that determines the target temperature index and its allowable range from the set target characteristic, using the database D1 of entered material target characteristics and target temperature indices (target characteristic-target temperature index DB) .

The predicted temperature index calculating section 13 is a section that performs heat-transfer analysis according to the structure shape, material and initial manufacturing condition, predicts the temperature history in all the regions of the structure and calculates a predicted temperature index. The predicted temperature index calculating section 13 is also a section that calculates a predicted temperature index from the shape, material and manufacturing condition of each region of the structure according to the database that represents the relation between the shape, material and manufacturing condition of the structure and predicted temperature index.

The manufacturing condition modification section 14 compares the target temperature index with predicted temperature index, modifies the manufacturing condition for a region out of the allowable range and performs local heat-transfer analysis again for the modification region and its vicinity. The manufacturing condition modification section 14 is a section that repeats region redefinition and manufacturing condition modification until the difference falls within the allowable range of target temperature index in all the regions.

The output processing section 15 is a section that outputs control data usable for the manufacturing device 200 after determination of the additive manufacturing condition for each region or sends it to the manufacturing device 200.

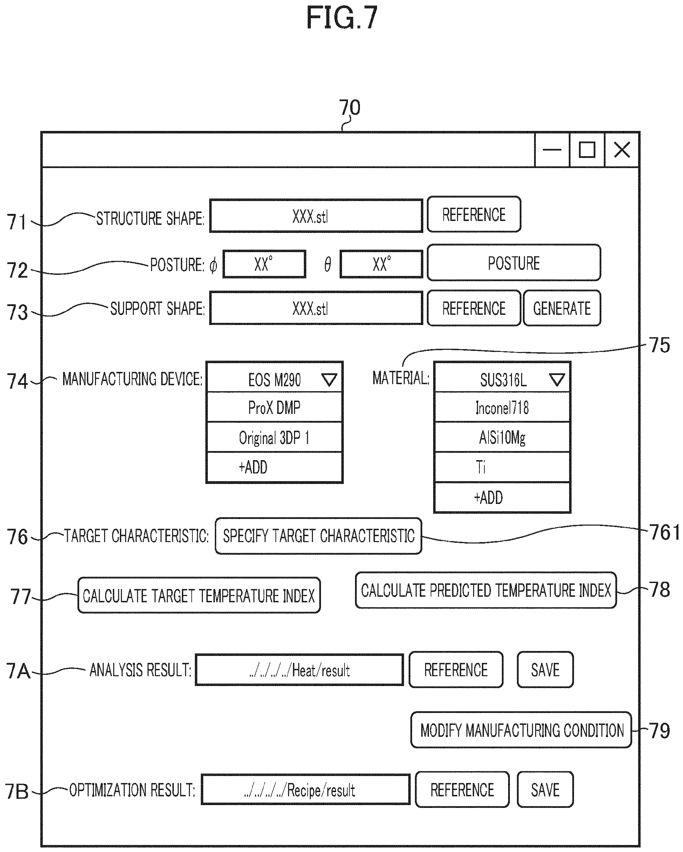

Fig. 7 is a diagram that shows an input screen of the additive manufacturing support system according to this embodiment. The input screen 70 includes a field 71 to specify the structure shape, a field 72 to specify the posture, and a field 73 to specify the support shape. The support shape can be specified by reference to an existing shape or can be generated from the structure shape and the specified posture.

The input screen 70 also includes fields 74 and 75 to select the manufacturing device and material. If a material is different from a selectable material for the original device (manufacturing device), it can be used by entering necessary information through "+ADD".

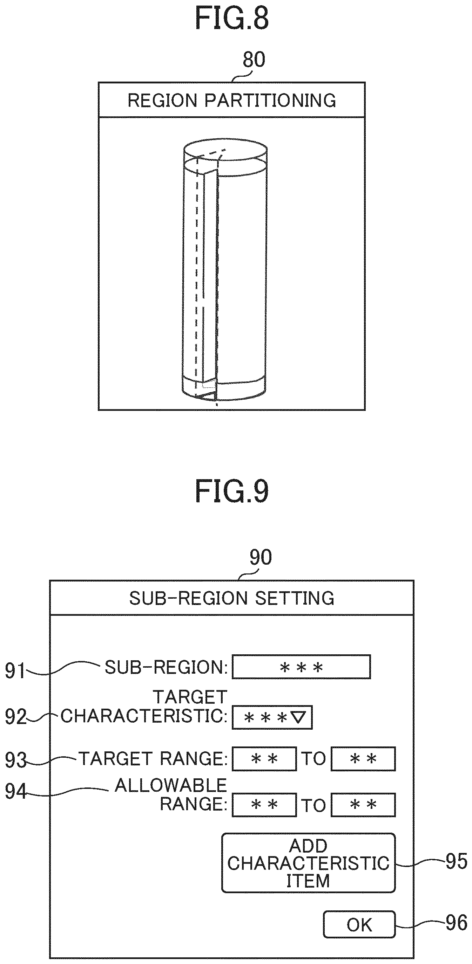

In the field 76 for target characteristics, a setting is made through the target characteristic setting screen 80 (see Fig. 8) by clicking the "SPECIFY TARGET CHARACTERISTIC" button 761. The target characteristic setting screen 80 (see Fig. 8) will be explained in detail later.

The target temperature index calculating section 12 is started by clicking the "CALCULATE TARGET TEMPERATURE INDEX" button 77. The predicted temperature index calculating section 13 is started by clicking the "CALCULATE PREDICTED TEMPERATURE INDEX" button 78. The manufacturing condition modification section 14, which compares the target temperature index with predicted temperature index and modifies the manufacturing condition, is started by clicking the "MODIFY MANUFACTURING CONDITION" button 79. The analysis result 7A and optimization result 7B can be confirmed on the display screen window and if external output is desired, the field to specify where to save the file can be used.

Fig. 8 is a view that shows a target characteristic setting screen 80 according to this embodiment. In Fig. 8., the target characteristic setting screen 80 opens by clicking the "SPECIFY TARGET CHARACTERISTIC" button 761. On the setting screen, the structure shape is partitioned and by clicking each region, a sub-region setting screen 90 as shown in Fig. 9 opens.

Fig. 9 is a view that shows the sub-region setting screen 90 according to this embodiment. The sub-region setting screen 90 includes a field 91 to enter the name of the sub-region, a field 92 to select the target characteristic item, and fields 93 and 94 to set the target range and the allowable range. If the sub-region has a plurality of target characteristics, a field to set the target characteristic is added by clicking the "ADD CHARACTERISTIC ITEM" button 95. After making settings, the previous screen is restored by clicking the "OK" button 96.

The functions in Fig. 8 in the embodiment in Fig. 1 are explained below.

The user partitions the structure into parts, which are surface region R1, joint region R2, and other region R3, and selects "corrosion resistance" as the characteristic item for the surface region R1, selects "weldability" as the characteristic item for the joint region R2, and selects "mechanical characteristic" as the characteristic item for the other region R3, and sets the target range and allowable range for all the characteristic items.

One or more than one target temperature index is used. If two or more target temperature indices are used, priorities are determined and the temperature index with higher priority is supposed to be satisfied.

Regarding the ferrite phase ratio that affects corrosion resistance and weldability, if the AF solidification mode is, supposed from the chemical composition, the ferrite phase ratio is mainly governed by generation of ferrite phase, so when the cooling speed is higher, the grain growth of ferrite phase crystal grains is slower and the ferrite phase ratio is smaller. As a consequence, the temperature index is determined by cooling speed. On the other hand, if the FA solidification mode is supposed from the chemical composition, transformation of ferrite phase to austenite phase governs. Therefore, the temperature index is determined by the stay time in the temperature range of austenite phase transformation (1300K to 1600K).

Regarding the defect ratio, crystal grain size, and precipitate dispersion that affect mechanical strength, the defect ratio is influenced by the relation between melt pool shape and lamination thickness. Therefore, the maximum achieved temperature that governs the melt pool shape becomes the temperature index. For crystal grain size and precipitate dispersion, the temperature index is determined by the cooling speed. The melt pool is a region that is formed when the metal powder of a portion irradiated with laser melts and liquefies and the upper layer and lower layer are joined through the melt pool to form a surface.

Regarding the equiaxed crystal ratio that affects mechanical strength, crystal grains with a small aspect ratio mainly exist in the vicinity of a melt pool boundary, so the following hypothesis is made. In a melt pool boundary, epitaxial solidified crystals are formed and the growth speed depends on temperature gradient and the growth speed of crystals directed toward the heat source center is the highest. On the other hand, adjacent crystal grains exist in the boundary, which blocks the growth of crystal grains. The blocked ones remain as equiaxed crystals in the boundary. In this case, the temperature index is determined by temperature gradient and solidification speed.

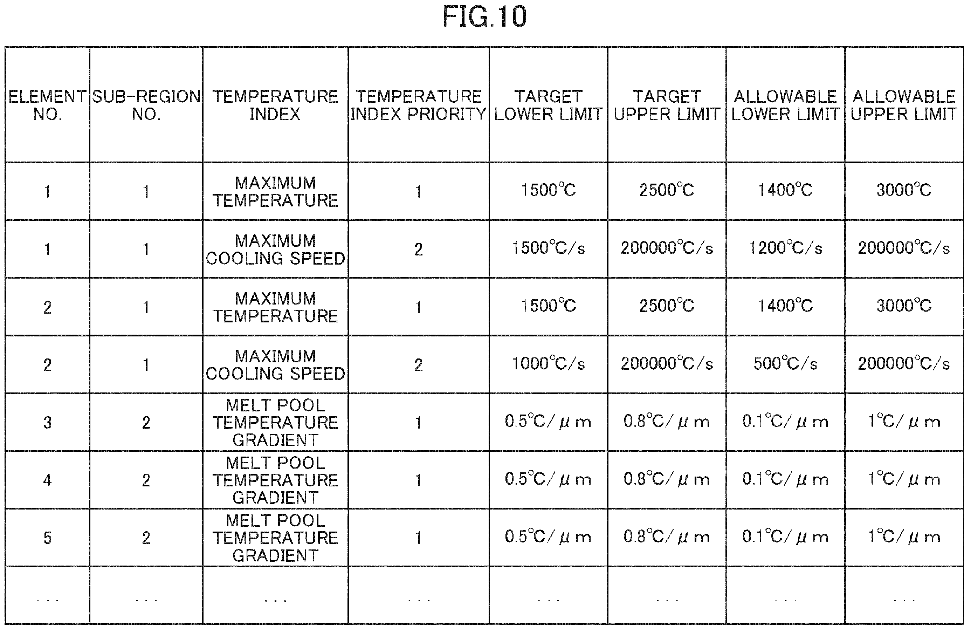

Fig. 10 is a view that shows an example of the output form of target temperature index range according to this embodiment. Fig. 10 is an example of target temperature index output from the additive manufacturing support system 100. It includes items such as element No., sub-region No. of element, temperature index, temperature index priority, target range (target lower limit, target upper limit) and allowable range (allowable lower limit, allowable upper limit). The temperature index includes maximum temperature, maximum cooling temperature, melt pool temperature gradient, and so on. For example, in the case of sub-region No. 1 of element No. 1, the manufacturing condition is that the temperature index of temperature index priority "1" is "maximum temperature" and "target lower limit temperature" is 1500°C, "target upper limit temperature" is 2500°C, "allowable lower limit temperature" is 1400°C and "allowable upper limit temperature" is 3000°C.

The additive manufacturing support system 100 according to this embodiment as described above is explained again below.

The additive manufacturing support system 100 according to this embodiment (see Fig. 6) includes: an input device 31 that enters data such as the shape, material and target characteristic of a structure; a data storage device 20 that stores databases; and a processing device 10 that modifies the manufacturing condition using information from the input device 31 and data storage device 20 and outputs it to a manufacturing device 200 -through a display device 32 or a communication device 33.

The processing device 10 includes: an input processing section 11 to set the shape, material and target characteristic of the structure; a target temperature index calculating section 12 to calculate the target temperature index from the target characteristic of each region of the structure (target temperature index calculating means); a predicted temperature index calculating section 13 to calculate the predicted temperature index from the shape, material and manufacturing condition of the structure (predicted temperature index calculating means); a manufacturing condition modification section 14 to modify the manufacturing condition until the difference between target index and predicted index falls within an allowable range (manufacturing condition modification means); and an output processing section 15 to output the manufacturing condition extracted for each region (transmission means).

In the additive manufacturing condition generating method according to this embodiment as described above, the processing device calculates the target temperature index (maximum temperature, temperature gradient, cooling speed, solidification speed, etc.) in order to satisfy the target characteristic requirement specification for the structure. The processing device finds the initial temperature history from the shape, material, and initial manufacturing condition of the structure and calculates the predicted temperature index. The processing device compares the target temperature index with predicted temperature index and modifies the manufacturing condition for a region out of the allowable range. In addition, in consideration of the thermal influence on the surroundings after modification of the manufacturing condition, the processing device again calculates the predicted temperature index locally in regions around the region for which the manufacturing condition has been modified. The processing device repeats redefinition of regions, manufacturing condition modification, and local heat-transfer analysis until the predicted temperature index is within the allowable range of the target temperature index in all the regions, to generate an adequate additive manufacturing condition.

The processing device calculates the target temperature index from the target characteristic of each region in reference to the database that represents the relation between the characteristic of the object to be additively manufactured, and the temperature index in manufacturing, and calculates the predicted temperature index from the shape/material/initial manufacturing condition of the structure. It modifies the manufacturing condition locally until the difference between the target index and predicted index falls within the allowable range in all the regions and determines the additive manufacturing condition to satisfy the target characteristic of the structure.

According to the additive manufacturing condition generating method in this embodiment, it is possible to determine the additive manufacturing condition that satisfies the target characteristic in all the regions, by modification of the manufacturing condition and local reanalysis, utilizing the relation between target characteristic and target temperature.

Additive manufacturing support software in this embodiment is additive manufacturing support software that supports generation of the manufacturing condition for additive manufacturing of a metallic structure. It is software to cause a computer to perform: an input process to set the shape, material, and target characteristic of the structure; a target temperature index calculating process to calculate the target temperature index from the target characteristic of each region of the structure; a predicted temperature index calculating process to calculate the predicted temperature index of each region from the shape, material, and manufacturing condition of the structure; a manufacturing condition modification process to modify the manufacturing condition until the difference between target temperature index and predicted temperature index falls within an allowable range; and an output process to output the manufacturing condition extracted for each region.

The additive manufacturing support software has a first database that stores the characteristic of an additively manufactured structure and the temperature index obtained in manufacturing of the structure (for example, database-D1 of target characteristics and target temperature indices). Consequently, the actual data in the past can be effectively used.

The target temperature index calculating process includes a process to make reference to the first database and calculate the target temperature index for each region from the target characteristic of each region. Consequently, the target temperature index can be calculated quickly. If data is a discrete value, the target temperature index can be calculated by complementary calculation.

The predicted temperature index calculating process includes a process to calculate the predicted temperature index from the shape, material, and manufacturing condition in each region of the structure according to a second database that represents the relation between the shape, material and manufacturing condition of the structure and predicted temperature index. Consequently, the predicted temperature index can be calculated quickly. If data is a discrete value, the predicted temperature index can be calculated by complementary calculation.

The predicted temperature index calculating process includes a process to calculate the predicted temperature index from the shape, material and manufacturing condition of the structure through heat-transfer analysis. The manufacturing condition includes the type of one or more heat sources, heat source output power, scan speed, and material preheating temperature. Consequently, even if the database does not contain data to be referenced, the predicted temperature index can be calculated.

The manufacturing condition modification process holds the manufacturing condition for a region in which the difference between target temperature index and predicted temperature index is within an allowable range, and modifies the manufacturing condition for a region in which it is out of the allowable range. The predicted temperature index calculating process performs heat-transfer analysis for the modified region and regions adjacent to it and again calculates the predicted temperature index. The manufacturing condition modification process repeats modification of the manufacturing condition until the difference between target temperature index and predicted temperature index falls within the allowable range. Consequently, the manufacturing condition for each region can be adequately determined.

The manufacturing condition modification process includes a process to perform reanalysis for the region for which the manufacturing condition has been modified and the regions adjacent to it and judge whether the predicted temperature index in the boundaries of these regions agrees with the predicted temperature index before modification of the manufacturing condition or not (for example, Step S41 in Fig. 3), and includes a process to expand the region for local reanalysis if it does not agree. Consequently, the influence on confirmed regions can be minimized.

The output process has at least one function of the process to send the control data including the manufacturing condition for each region to another device through a communication network and the process to output the control data as a file. The control data includes data representing the manufacturing condition for a region and data representing the position of the region in the structure, and the manufacturing condition includes the type of one or more heat sources, heat source output power, scan speed and scan route, and material preheating temperature. Consequently, the manufacturing condition for the manufacturing device 200 can be adequately supported as shown in Fig. 6.

The input process includes a process to divide the structure into a plurality of regions and specify the target characteristic for each region and a process to display an input screen. Consequently, an adequate target characteristic can be specified for each region as shown in Fig. 8 and Fig. 9.

The target temperature index calculating process includes a screen display process to display the target temperature index distribution on the structure. The predicted temperature index calculating process includes a screen display process to display the predicted temperature index distribution on the structure. The manufacturing condition modification process includes a screen display process to display the manufacturing condition distribution after modification on the structure. Consequently, the user can make reference to the distributions and confirm the manufacturing condition for additive manufacturing.

List of Reference Signs

10     processing device,

11     input processing section,

12     target temperature index calculating section (target temperature index calculating means),

13      predicted temperature index calculating section (predicted temperature index calculating means),

14      manufacturing condition modification section (manufacturing condition modification means),

15      output processing section (transmission means),

20      data storage device,

31      input device,

32      display device,

33      communication device (transmission means),

100     additive manufacturing support system,

200     manufacturing device,

331     confirmed zone,

332     modification zone,

333     buffer zone,

D1      database of target characteristics and target emperature indices (first database),

D2      database of materials and initial manufacturing conditions,

D3      database of materials and manufacturing condition modification coefficients,

R1      surface region,

R2      joint region,

R3      other region

## Claims

1.  An additive manufacturing condition generating method for generating a manufacturing condition for additive manufacturing of a metallic structure, comprising:

    the target temperature index calculating step to calculate a target temperature index from a target characteristic in each region of the structure;
    the predicted temperature index calculating step to calculate a predicted temperature index for the region from a shape, material and manufacturing condition of the structure;
    the evaluation step to evaluate whether difference between the target temperature index and the predicted temperature index is within an allowable range or not; and
    the manufacturing condition modification step to modify the manufacturing condition if the difference is out of the allowable range at the evaluation step, wherein
    the manufacturing condition modification step and the predicted temperature index calculating step are repeated until the difference falls within the allowable range at the evaluation step.

2.  The additive manufacturing condition generating method according to Claim 1, wherein

    at the target temperature index calculating step, a target temperature index is calculated from the target characteristic in each region of the structure according to a first database representing a relation between a target characteristic of the structure to be additively manufactured and a target temperature index obtained in manufacturing,
the target temperature index includes at least one of maximum achieved temperature, maximum cooling speed for cooling to room temperature, average cooling speed for cooling to room temperature, maximum temperature gradient in the region, average temperature gradient in the region, maximum solidification speed of a molten portion, and average solidification speed of a welded portion, and
the relation between the target characteristic and the target temperature index that is stored in the first database is determined from a measurement result of the structure additively manufactured under at least one manufacturing condition or determined by analysis that simulates manufacturing circumstances.

3. The additive manufacturing condition generating method according to Claim 1, wherein the manufacturing condition includes a type of one or more heat sources, heat source output power, scan speed, and material preheating temperature.

4. The additive manufacturing condition generating method according to Claim 1, wherein

at the predicted temperature index calculating step, the predicted temperature index is calculated from the shape, material and manufacturing condition of each region of the structure according to a second database that represents a relation between the shape, material and manufacturing condition of the structure and the predicted temperature index, and
the relation between the manufacturing condition and the predicted temperature index that is stored in the second database is determined by analysis that simulates circumstances of additive manufacturing under at least one manufacturing condition.

5. The additive manufacturing condition generating method according to Claim 1, wherein

at the manufacturing condition modification step,
the manufacturing condition is held for a region in which the difference between the target temperature index and the predicted temperature index is within the allowable range,
the manufacturing condition is modified for a region out of the allowable range, and for the modified region and regions adjacent to the region, the predicted temperature index is calculated again by performing heat-transfer analysis, and
the predicted temperature index calculating step and the evaluation step are repeated until the difference between the target temperature index and the predicted temperature index falls within the allowable range in the region out of the allowable range.

6. The additive manufacturing condition generating method according to Claim 5, wherein

at the manufacturing condition modification step,
reanalysis is performed for the region for which the manufacturing condition has been modified and the regions adjacent to the region, and a judgment is made as to whether the predicted temperature index in boundaries of these regions agrees with the predicted temperature index before modification of the manufacturing condition or not, and if not, the region for local reanalysis is expanded.

7. Additive manufacturing support software that supports generation of a manufacturing condition for additive manufacturing of a metallic structure, causing a computer to perform:

an input process to set a shape, material, and target characteristic of the structure;
a target temperature index calculating process to calculate a target temperature index from the target characteristic in each region of the structure;
a predicted temperature index calculating process to calculate a predicted temperature index for the region from the shape, material, and manufacturing condition of the structure;
a manufacturing condition modification process to modify the manufacturing condition until difference between the target temperature index and the predicted temperature index falls within an allowable range; and
an output process to output a manufacturing condition extracted for each region.

8. The additive manufacturing support software according to Claim 7, having a first database that stores the characteristic of the additively manufactured structure and the temperature index obtained in manufacturing of the structure.

**9.** The additive manufacturing support software according to Claim 8, wherein the target temperature index calculating process includes a process to make reference to the first database and calculate a target temperature index for each region from the target characteristic of each region.

**10.** The additive manufacturing support software according to Claim 8, wherein the predicted temperature index calculating process includes a process to calculate the predicted temperature index from the shape, material and manufacturing condition of each region of the structure according to a second database that represents a relation between the shape, material and manufacturing condition of the structure and the predicted temperature index.

**11.** The additive manufacturing support software according to Claim 8, wherein

the predicted temperature index calculating process includes a process to calculate the predicted temperature index from the shape, material and manufacturing condition of the structure through heat-transfer analysis, and the manufacturing condition includes a type of one or more heat sources, heat source output power, scan speed, and material preheating temperature.

**12.** The additive manufacturing support software according to Claim 8, wherein

at the manufacturing condition modification process, the manufacturing condition is held for a region in which the difference between the target temperature index and the predicted temperature index is within the allowable range, and the manufacturing condition is modified for a region out of the allowable range, at the predicted temperature index calculating process, for the modified region and regions adjacent to the region, the predicted temperature index is calculated again by performing heat-transfer analysis, and at the manufacturing condition modification process, the process to modify the manufacturing condition is repeated until the difference between the target temperature index and the predicted temperature index falls within the allowable range.

**13.** The additive manufacturing support software according to Claim 12, wherein the manufacturing condition modification process includes a process to perform reanalysis for the region for which the manufacturing condition has been modified and the regions adjacent to the region and judge whether the predicted temperature index in boundaries of these regions agrees with the predicted temperature before modification of the manufacturing condition, and if not, includes a process to expand the region for local reanalysis.

**14.** The additive manufacturing support software according, to Claim 8, wherein

the output process has at least one function of a process to transmit control data including a manufacturing condition for each region, to another device through a communication network and a process to output the control data as a file, and the control data includes data representing the manufacturing condition for a region and data representing a position of the region in the structure and the manufacturing condition includes a type of one or more heat sources, heat source output power, scan speed and scan route, and material preheating temperature.

**15.** The additive manufacturing support software according to Claim 7, wherein the input process includes a process to divide the structure into a plurality of regions and specify a target characteristic for each region and an input screen display process.

**16.** The additive manufacturing support software according to Claim 8, wherein the target temperature index calculating process includes a screen display process to display a target temperature index distribution on the structure.

**17.** The additive manufacturing support software according to Claim 8, wherein the predicted temperature index calculating process includes a screen display process to display a predicted temperature index distribution on the structure.

**18.** The additive manufacturing support software according to Claim 8, wherein the manufacturing condition modification process includes a screen display process to display a manufacturing condition distribution after modification on the structure.

**19.** An additive manufacturing condition support system that supports a manufacturing condition for additive manufacturing of a structure by a manufacturing device, the additive manufacturing condition support system comprising:

target temperature index calculating means to calculate a target temperature index from a target characteristic in each region of the structure;

predicted temperature index calculating means to calculate a predicted temperature index for the region from a shape, material and manufacturing condition of the structure;

manufacturing condition modification means to evaluate whether difference between the target temperature index and the predicted temperature index is within an allowable range or not and modify the manufacturing condition if the difference is out of the allowable range; and

transmission means to transmit the manufacturing condition to the manufacturing device if the difference is within the allowable range.

# FIG.1

# FIG.2

START

S1
CALCULATE TARGET
TEMPERATURE INDEX ($I_{target}$)
FROM TARGET CHARACTERISTIC

S2
CALCULATE PREDICTED
TEMPERATURE INDEX ($I_{prediction}$)
FROM SHAPE, MATERIAL, AND
MANUFACTURING CONDITION

S3
$\Delta I = |I_{target} - I_{prediction}| \le \delta$ ?

NO

S4
MODIFY MANUFACTURING
CONDITION FOR REGION OUT
OF ALLOWABLE RANGE

YES

S5
OUTPUT
MANUFACTURING CONDITION

END

15

# FIG.3

START

PERFORM MESH DIVISION OF STRUCTURE AND READ $I_{target}$ AND $I_{prediction}$ OF ELEMENT — S31

DEFINE "REGION" FROM $I_{target}$, NO. OF REGIONS=n — S32

i = 1 — S33

ELEMENT OF REGION(i): $\Delta I = |I_{target} - I_{prediction}| \leq \delta$ ? — S34  YES / NO

DEFINE "ZONE" FROM $\Delta I$ (NO. OF ZONES=m), DEFINE MODIFICATION ZONE AND CONFIRMED ZONE — S35

DEFINE ZONE ADJACENT TO MODIFICATION ZONE (i) AS BUFFER ZONE — S36

j = 1 — S37

ZONE (j): MODIFY MANUFACTURING CONDITION FOR MODIFICATION ZONE AND CALCULATE $I_{modified\ prediction}$ BY REANALYSIS — S38

j=m? — S39  NO

j = j + 1 — S40

YES

ELEMENT IN BOUNDARY BETWEEN BUFFER ZONE AND CONFIRMED ZONE: $I_{modified\ prediction} = I_{prediction}$? — S41  NO

EXPAND BUFFER ZONE — S44

YES

BUFFER ZONE: $|\Delta I = I_{target} - I_{modified\ prediction}| \leq \delta$ ? — S42  NO

i = i + 1 — S45

YES

i=n? — S43  NO

YES

OUTPUT MANUFACTURING CONDITION — S46

END

# FIG.4

```
                    ┌──────────┐
                    │  START   │
                    └────┬─────┘
                         │
                         ▼              S381
        ┌────────────────────────────────────┐
        │   READ ∂C/∂I FROM DATABASE          │
        └────────────────┬───────────────────┘
                         │
                         ▼              S382
        ┌────────────────────────────────────┐
        │         MODIFICATION ZONE:          │
        │      ΔC =(∂C/∂I) × ΔI               │
        │      C_modification = C + ΔC        │
        └────────────────┬───────────────────┘
                         │
                         ▼              S383
        ┌────────────────────────────────────┐          ┌──────────────────────────────────────────┐
        │    REANALYZE BUFFER ZONE            │   S386   │  ∂C/∂I = (C_modification − C)/            │
        │    AND MODIFICATION ZONE:           │          │  (I_modified prediction − I_prediction)   │
        │  I_modified prediction = Sim(C_modification) │ └──────────────────────────────────────────┘
        └────────────────┬───────────────────┘
                         │
                         ▼              S384                    NO
        ╱──────────────────────────────────────╲ ──────────────►
        │       MODIFICATION ZONE:              │
        │ ΔI=|I_target − I_modified prediction| ≤ δ ? │
        ╲──────────────────────────────────────╱
                         │ YES
                         ▼              S385
        ┌────────────────────────────────────┐
        │   SAVE ∂C/∂I IN DATABASE            │
        └────────────────┬───────────────────┘
                         │
                         ▼              S387
        ┌────────────────────────────────────┐
        │   OUTPUT MANUFACTURING              │
        │ CONDITION AND I_modified prediction │
        │        FOR ZONE (i)                 │
        └────────────────┬───────────────────┘
                         │
                         ▼
                    ┌──────────┐
                    │   END    │
                    └──────────┘
```

## FIG.5A

## FIG.5B

## FIG.5C

# FIG.6

200

MANUFACTURING
DEVICE

NW

100

31
INPUT DEVICE

32
DISPLAY DEVICE

33
COMMUNICATION
DEVICE

10
PROCESSING DEVICE

INPUT PROCESSING
SECTION — 11

TARGET TEMPERATURE
INDEX CALCULATING
SECTION — 12

PREDICTED TEMPERATURE
INDEX CALCULATING
SECTION — 13

MANUFACTURING
CONDITION MODIFICATION
SECTION — 14

OUTPUT
PROCESSING SECTION — 15

20
DATA STORAGE DEVICE
D1

TARGET
CHARACTERISTIC-TARGET
TEMPERATURE
INDEX DATABASE

D2

MATERIAL-INITIAL
MANUFACTURING
CONDITION DATABASE

D3

MATERIAL-MANUFACTURING
CONDITION MODIFICATION
COEFFICENT DATABASE

# FIG.7

70

**71** STRUCTURE SHAPE: | XXX.stl | [ REFERENCE ]

**72** POSTURE: φ [ XX° ] θ [ XX° ] [ POSTURE ]

**73** SUPPORT SHAPE: | XXX.stl | [ REFERENCE ] [ GENERATE ]

**74** MANUFACTURING DEVICE:
| EOS M290 ▽ |
| ProX DMP |
| Original 3DP 1 |
| +ADD |

**75** MATERIAL:
| SUS316L ▽ |
| Inconel718 |
| AlSi10Mg |
| Ti |
| +ADD |

**76** TARGET CHARACTERISTIC: [ SPECIFY TARGET CHARACTERISTIC ] **761**

**77** [ CALCULATE TARGET TEMPERATURE INDEX ]    [ CALCULATE PREDICTED TEMPERATURE INDEX ] **78**

**7A** ANALYSIS RESULT: | ../../../Heat/result | [ REFERENCE ] [ SAVE ]

[ MODIFY MANUFACTURING CONDITION ] **79**

**7B** OPTIMIZATION RESULT: | ../../../Recipe/result | [ REFERENCE ] [ SAVE ]

EP 3 960 332 A1

# FIG.8

80

REGION PARTITIONING

# FIG.9

90

SUB-REGION SETTING

91 — SUB-REGION: [ * * * ]

92 — TARGET CHARACTERISTIC: [ * * * ▽ ]

93 — TARGET RANGE: [ * * ] TO [ * * ]

94 — ALLOWABLE RANGE: [ * * ] TO [ * * ]

[ ADD CHARACTERISTIC ITEM ] — 95

[ OK ] — 96

21

# FIG.10

EP 3 960 332 A1

| ELEMENT NO. | SUB-REGION NO. | TEMPERATURE INDEX | TEMPERATURE INDEX PRIORITY | TARGET LOWER LIMIT | TARGET UPPER LIMIT | ALLOWABLE LOWER LIMIT | ALLOWABLE UPPER LIMIT |
|---|---|---|---|---|---|---|---|
| 1 | 1 | MAXIMUM TEMPERATURE | 1 | 1500℃ | 2500℃ | 1400℃ | 3000℃ |
| 1 | 1 | MAXIMUM COOLING SPEED | 2 | 1500℃/s | 200000℃/s | 1200℃/s | 200000℃/s |
| 2 | 1 | MAXIMUM TEMPERATURE | 1 | 1500℃ | 2500℃ | 1400℃ | 3000℃ |
| 2 | 1 | MAXIMUM COOLING SPEED | 2 | 1000℃/s | 200000℃/s | 500℃/s | 200000℃/s |
| 3 | 2 | MELT POOL TEMPERATURE GRADIENT | 1 | 0.5℃/$\mu$m | 0.8℃/$\mu$m | 0.1℃/$\mu$m | 1℃/$\mu$m |
| 4 | 2 | MELT POOL TEMPERATURE GRADIENT | 1 | 0.5℃/$\mu$m | 0.8℃/$\mu$m | 0.1℃/$\mu$m | 1℃/$\mu$m |
| 5 | 2 | MELT POOL TEMPERATURE GRADIENT | 1 | 0.5℃/$\mu$m | 0.8℃/$\mu$m | 0.1℃/$\mu$m | 1℃/$\mu$m |
| ... | ... | ... | ... | ... | ... | ... | ... |

# EP 3 960 332 A1

**INTERNATIONAL SEARCH REPORT**

| International application No. |
|---|
| PCT/JP2020/007793 |

| A. CLASSIFICATION OF SUBJECT MATTER |
|---|
| Int. Cl. B22F3/105(2006.01)i, B22F3/16(2006.01)i<br>FI: B22F3/16, B22F3/105<br><br>According to International Patent Classification (IPC) or to both national classification and IPC |

| B. FIELDS SEARCHED |
|---|
| Minimum documentation searched (classification system followed by classification symbols)<br>Int. Cl. B22F3/105, B22F3/16 |
| Documentation searched other than minimum documentation to the extent that such documents are included in the fields searched<br>Published examined utility model applications of Japan 1922-1996<br>Published unexamined utility model applications of Japan 1971-2020<br>Registered utility model specifications of Japan 1996-2020<br>Published registered utility model applications of Japan 1994-2020 |
| Electronic data base consulted during the international search (name of data base and, where practicable, search terms used) |

| C. DOCUMENTS CONSIDERED TO BE RELEVANT |
|---|

| Category* | Citation of document, with indication, where appropriate, of the relevant passages | Relevant to claim No. |
|---|---|---|
| X | WO 2018/128827 A1 (GENERAL ELECTRIC COMPANY) 12 July 2018, claims, paragraphs [0021], [0025] | 1-19 |
| X | US 2018/0229303 A1 (UNITED TECHNOLOGIES CORPORATION) 16 August 2018, claim 22, paragraph [0026] | 1-19 |

| ☐ Further documents are listed in the continuation of Box C. | ☒ See patent family annex. |
|---|---|

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search<br>07.05.2020 | Date of mailing of the international search report<br>19.05.2020 |
|---|---|
| Name and mailing address of the ISA/<br>Japan Patent Office<br>3-4-3, Kasumigaseki, Chiyoda-ku,<br>Tokyo 100-8915, Japan | Authorized officer<br><br><br>Telephone No. |

Form PCT/ISA/210 (second sheet) (January 2015)

**INTERNATIONAL SEARCH REPORT**
Information on patent family members

International application No.

PCT/JP2020/007793

| Patent Documents referred to in the Report | Publication Date | Patent Family | Publication Date |
|---|---|---|---|
| WO 2018/128827 A1 | 12.07.2018 | JP 2020-505506 A claims, paragraphs [0017], [0021] US 2018/0193954 A1 claims, paragraphs [0021], [0025] EP 3565682 A1 claims, paragraphs [0021], [0025] CN 110366463 A | |
| US 2018/0229303 A1 | 16.08.2018 | EP 3354382 A1 claim 13, paragraph [0006] | |

Form PCT/ISA/210 (patent family annex) (January 2015)

**EP 3 960 332 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2017177462 A

- JP 2018134866 A